# FASCICULE DE BREVET EUROPEEN

(11) **EP 2 856 052 B1**
(45) Date de publication et mention de la délivrance du brevet: **22.02.2017**
(21) Numéro de dépôt: 13793861.9
(22) Date de dépôt: 23.05.2013
(51) Int. Cl.: F26B 9/06, F26B 21/04, F26B 3/04

(54) **DISPOSITIF DE SECHAGE D'AU MOINS UN VERRE OPTIQUE**
VORRICHTUNG ZUM TROCKNEN VON MINDESTENS EINEM OPTISCHEN GLAS
DEVICE FOR DRYING AT LEAST ONE OPTICAL GLASS

(30) Priorité: 24.05.2012 FR 1254805
(43) Date de publication de la demande: 08.04.2015
(73) Titulaire: SCL International Special Coating Laboratory, 74160 Archamps (FR)
(72) Inventeur: GEHRIG, Jean, F-74580 Viry (FR); GEHRIG, Denis, F-74160 Saint-Julien en Genevois (FR)
(74) Mandataire: Verriest, Philippe
(86) Numéro de dépôt international: PCT/FR2013/051116
(87) Numéro de publication internationale: WO 2013/175125

(56) Documents cités:
- EP-A1- 0 098 462
- WO-A1-91/00486
- WO-A1-96/08685
- CH-A- 111 968
- GB-A- 2 058 317
- US-A1- 2009 293 302

## Description

La présente invention concerne un dispositif de séchage pour verre optique.

Il est connu d'utiliser un dispositif de séchage composé d'une enceinte destinée à accueillir le ou les verres optiques. Selon l'état de la technique, un élément chauffant émetteur de rayons infrarouges entraine une augmentation de la température dans l'enceinte. La température élevée dans l'enceinte entraine le processus de séchage. Selon l'état de la technique, la température minimale de chauffe doit être supérieure à 80°C.

Le document WO91/00486 divulge un dispositif de séchage selon le préambule de la revendication 1.

Le traitement de surface d'un verre optique se déroule en plusieurs étapes. Le verre optique subit plusieurs séchages au cours du processus de traitement de surface, notamment après un lavage, après une application d'une première couche de vernis et après une application d'une éventuelle deuxième couche de vernis.

Lors du séchage réalisé après le lavage, l'augmentation de la température permet un dégazage du verre optique. Les séchages réalisés après l'application d'une première couche de vernis et après l'application d'une deuxième couche de vernis ont pour rôle de pré-polymériser le vernis.

Toutefois, l'obtention d'une température de chauffe uniforme sur toute la surface du verre optique n'est pas évidente avec un dispositif possédant un émetteur de rayons infrarouges. Selon l'état de la technique il peut apparaître des zones moins chauffées, notamment pour la partie du verre la plus éloignée de l'émetteur infrarouge.

Lors du séchage réalisé après l'application de la première couche de vernis, il peut se présenter des zones où le vernis n'est pas entièrement pré-polymérisé. Ce phénomène est caractérisé par la formation d'un voile blanc dans la couche de vernis.

Lors du séchage réalisé après l'application de la deuxième couche de vernis, des traces de doigts sont à craindre au moment du retrait du verre hors du dispositif. Des irrégularités de surface sont susceptibles d'apparaitre sur le verre, pouvant aller jusqu'au craquage du vernis.

En conséquence, si l'un de ces défauts apparait, le verre a des propriétés optiques fortement dégradées.

La présente invention vise à résoudre tout ou partie des inconvénients mentionnés ci-dessus.

A cet effet, la présente invention concerne un dispositif de séchage d'au moins un verre optique, comprenant les caractéristiques de la revendication 1.

Le collecteur et le circuit de circulation réalisent un recyclage partiel du flux d'air de séchage.

Selon l'invention, le dispositif comprend un support de l'au moins un verre optique, le support étant disposé à l'intérieur de l'enceinte et étant agencé pour que les surfaces émergente et incidente de chaque verre optique présentent chacune une zone de contact avec l'air contenu dans l'enceinte.

Selon l'invention, chaque entrée de l'enceinte possède un diffuseur agencé pour générer un écoulement d'air homogène et tangentiel aux surfaces émergente et incidente de chaque verre optique.

Le séchage est uniforme sur la surface incidente et émergente du verre optique pour éviter l'apparition de défaut.

Selon un aspect de l'invention, l'enceinte possède une première et une deuxième entrée agencées pour que l'écoulement de la première entrée soit parallèle et de sens opposé à l'écoulement de la deuxième entrée.

La structure symétrique obtenue permet un séchage uniforme et rapide du verre optique.

Selon un aspect de l'invention, chaque diffuseur comporte une sortie plane percée d'une pluralité de trous, la distance séparant les centres de deux trous voisins étant comprise entre une fois et trois fois le diamètre du trou, le diamètre de chaque trou étant compris entre 0,5 et 3 mm.

La pluralité de trous en sortie de chaque diffuseur a un effet aéraulique visant à réaliser un écoulement homogène.

Selon un aspect de l'invention, des moyens de régulation des débits du flux d'air extérieur et du flux d'air repris sont agencés de manière à modifier la proportion du flux d'air extérieur, par rapport à l'ensemble constitué des flux d'air extérieur et d'air repris, entre 0 et 100%.

Les résidus du séchage provenant du ou des verres optiques se retrouvent mélangés à l'air de séchage. Une concentration élevée de résidus peut rendre l'air inflammable. L'adjonction d'air extérieur dans le circuit limite la concentration des résidus.

Selon un aspect de l'invention, des moyens de régulation de la température du flux d'air de séchage comportent une sonde de mesure de la température et un élément chauffant en contact avec le flux d'air de séchage.

La température doit être comprise dans un domaine défini pour permettre un séchage correct du ou des verres optiques, typiquement entre 80 et 110°C.

Selon un aspect de l'invention, un système d'ouverture de l'enceinte est agencé pour permettre le passage d'un verre optique.

Selon un aspect de l'invention, l'orifice d'évacuation de l'enceinte du dispositif de séchage est compris dans le système d'ouverture.

Selon un aspect de l'invention, le système d'ouverture comprend au moins un volet, l'orifice d'évacuation étant disposé en périphérie du volet.

Selon un aspect de l'invention, un banc de traitement de surface dudit au moins un verre optique comporte :
- une hotte aspirante pourvue de moyens d'extraction de l'air et des vapeurs hors du banc de traitement depuis une zone d'extraction du banc de traitement,
- le dispositif de séchage, dans lequel l'orifice d'évacuation est en communication fluidique avec la zone d'extraction, la pression de la zone d'extraction étant inférieure à la pression dans l'enceinte.

Le flux évacué du dispositif de séchage dans la zone d'extraction est aspiré par la hotte et extrait hors du banc de traitement. L'air chargé en vapeur, éventuellement inflammable, ne stagne pas dans le banc de traitement.

De toute façon l'invention sera bien comprise à l'aide de la description qui suit en référence aux dessins schématiques annexés représentant, à titre d'exemple non limitatif, une forme d'exécution de ce dispositif.
Figure 1 est schéma d'un dispositif de séchage d'au moins un verre optique.
Figure 2 est un détail d'une vue de face d'un banc de traitement de surface.
Figure 3 est une vue en perspective d'une enceinte du dispositif de séchage.
Figure 4 est une vue partielle en perspective de l'enceinte du dispositif de séchage.

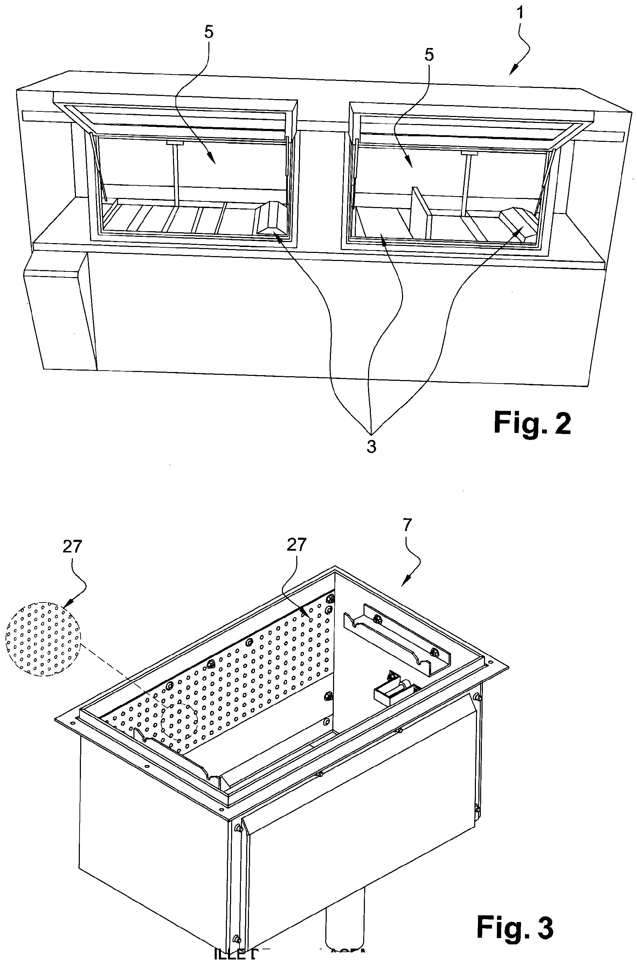

Selon un mode de réalisation décrit sur la figure 2, un banc de traitement de surface 1 comporte un dispositif de séchage 3 et une zone d'extraction 5.

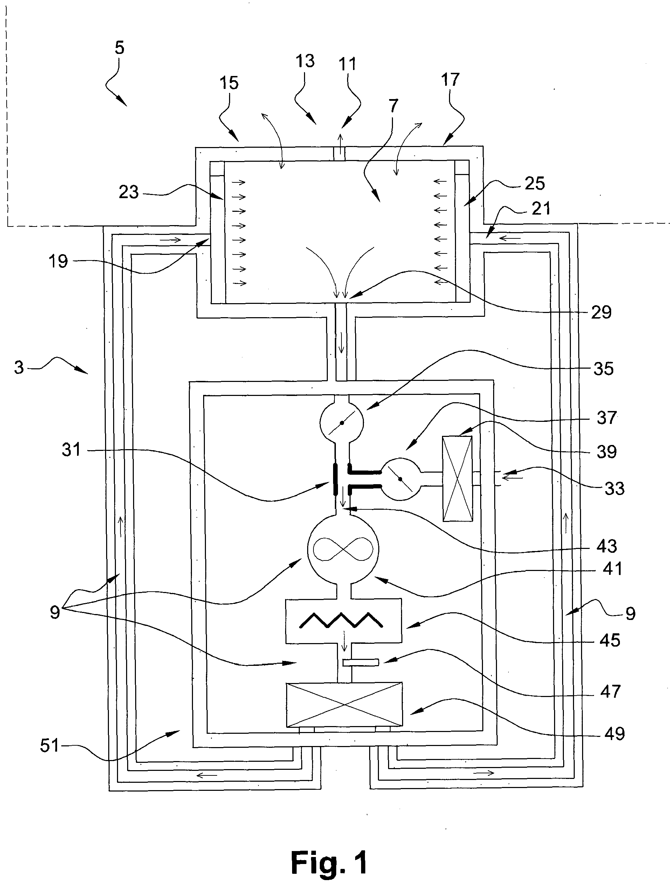

Comme montré plus particulièrement sur la figure 1, le dispositif séchage 3 comprend une enceinte 7 et un circuit de circulation d'air 9.

Selon un mode de réalisation décrit sur la figure 1, un orifice d'évacuation 11 raccorde l'enceinte 7 à la zone d'extraction 5 en communication de fluide. Un système d'ouverture 13 entre l'enceinte 7 et la zone d'extraction 5 comporte deux volets relevables 15 et 17. L'interstice compris entre les deux volets relevables 15 et 17 constitue l'orifice d'évacuation 11.

Le circuit de circulation d'air 9 est raccordé en communication de fluide par deux entrées d'air 19 et 21 à l'enceinte 7. Chaque entrée d'air 19 et 21 possède respectivement un diffuseur 23 et 25. Selon un mode de réalisation, les diffuseurs présentent une sortie plane dotée d'une pluralité de trous 27 comme montré plus particulièrement sur la figure 3. La distance séparant les centres de deux trous voisins est comprise entre une fois et trois fois le diamètre du trou, le diamètre de chaque trou étant compris entre 0,5 et 3 mm. Selon un mode de réalisation décrit sur la figure 3, les trous 27 réalisent un quadrillage régulier des sorties des diffuseurs 23 et 25.

Selon un mode de réalisation décrit sur la figure 1, l'enceinte 7 présente une sortie d'air 29 en communication fluidique avec un collecteur 31. Le collecteur 31 est également en communication fluidique avec une arrivée d'un flux d'air extérieur 33 et le circuit de circulation 9. Une première vanne 35 est située sur la voie de communication entre la sortie 29 et le collecteur 31 et une deuxième vanne 37 entre l'arrivée d'un flux d'air extérieur 33 et le collecteur 31. La première 35 et la deuxième vanne 37 sont réglables entre une première position correspondant à une fermeture totale et une deuxième position correspondant à une ouverture totale.

Selon un mode de réalisation décrit sur la figure 1, un pré-filtre 39 se trouve sur la voie de communication fluidique entre l'arrivée d'un flux d'air extérieur 33 et la seconde vanne 37.

Selon un mode de réalisation décrit sur la figure 1, le circuit de circulation 9 comprend les éléments suivants alignés et en communication fluidique :
- un ventilateur 41 agencé de telle sorte que l'aspiration soit raccordée en communication fluidique à une sortie du collecteur 43,
- un élément chauffant 45 raccordé au refoulement du ventilateur 41,
- une sonde de mesure de la température 47,
- un filtre haute-température 49.

Selon un mode de réalisation décrit sur la figure 1, le circuit de circulation d'air 9, ainsi que le collecteur 31, la première vanne 35, la seconde vanne 37 et le pré-filtre 39 sont compris dans une unité de traitement d'air 51.

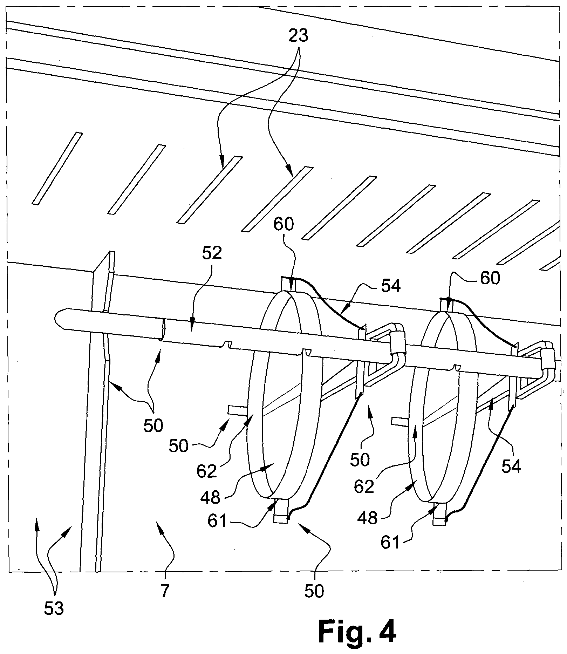

Selon un mode de fonctionnement, les volets 15 et 17 sont relevés pour permettre l'introduction d'un verre optique 48 préalablement verni dans l'enceinte 7. Comme illustré à la figure 4, le ou les verres optiques 48 sont disposés sur un support 50 dans l'enceinte de telle sorte que l'écoulement d'air de séchage provenant des diffuseurs soit homogène et tangentiel aux surfaces émergente et incidente de chaque verre optique 48. Le support 50 comprend une tige 52 disposée horizontalement à l'intérieur de l'enceinte 7 sur deux montants 53 solidaires de la paroi de l'enceinte 7. Le support 50 comprend également une pluralité de crochets 54 disposés sur la tige 52. Chaque verre optique 48 est maintenu en position en trois points de contact 60, 61, 62 à un crochet 54 du support 50. L'enceinte 7 est pourvue d'une sortie 29 par laquelle s'échappe un flux d'air repris.

Selon un mode de fonctionnement décrit des figures 1 et 2, l'air repris transite par une unité de traitement d'air 51. Un ventilateur 41 entraine la circulation du flux d'air repris. Un flux d'air extérieur est également aspiré par le ventilateur 41. La part d'air repris par rapport à l'air extérieur est régulée par deux vannes 35 et 37. Au refoulement du ventilateur 41, le flux d'air composé du flux d'air repris et du flux d'air extérieur constitue le flux d'air de séchage. Le flux d'air de séchage est réchauffé par un élément chauffant 45, puis filtrée par un filtre haute-température 49. Enfin l'air de séchage est expulsé hors du circuit de circulation 9 dans l'enceinte par les diffuseurs 23 et 25. L'écoulement d'air de séchage provenant des diffuseurs est homogène et tangentiel aux surfaces émergente et incidente de chaque verre optique 48. Une partie de l'air de séchage est ensuite recyclé comme air repris selon le processus décrit ci-avant.

Selon un mode de fonctionnement, le verre optique 48 disposé dans l'enceinte 7 du dispositif de séchage 3 est exposée à un flux d'air de séchage à une température déterminée pendant une période déterminée pour être totalement sec. Le verre optique 48 est ensuite retiré de l'enceinte 7.

Comme il va de soi, l'invention ne se limite pas à la seule forme d'exécution de ce dispositif, décrite ci-dessus à titre d'exemple, elle en embrasse au contraire toutes les variantes de réalisation couvertes par les revendications.

## Revendications

1. Dispositif de séchage (3) d'au moins un verre optique (48), comprenant :
- une enceinte (7), destinée à loger au moins un verre optique (48), présentant au moins une entrée d'air (19) et au moins une sortie d'air (29), ladite au moins une entrée d'air (19, 21) possédant undiffuseur (23, 25) agencé pour générer un écoulement d'air,
- un circuit de circulation d'air (9) agencé pour souffler un flux d'air de séchage depuis ladite au moins une entrée (19) vers ladite au moins une sortie (29),
- un orifice d'évacuation (11), en communication fluidique avec l'enceinte (7) de façon à évacuer une première partie du flux d'air de séchage, dite flux air évacué, hors du dispositif de séchage (3),
- un collecteur (31) présentant :
o une arrivée d'une seconde partie du flux d'air de séchage, dite air repris en communication fluidique avec l'enceinte (7) depuis ladite au moins une sortie d'air (29),
o une arrivée d'un flux d'air extérieur (33) au dispositif de séchage (3),
o une sortie (43) en communication fluidique avec le circuit de circulation (9)
- un support (50) de l'au moins un verre optique (48), le support (50) étant disposé à l'intérieur de l'enceinte (7)
**caractérisé en ce que** ledit support (50) est agencé pour que les surfaces émergente et incidente de l'au moins un verre optique (48) présentent chacune une zone de contact avec l'air contenu dans l'enceinte (7) lorsque l'au moins un verre optique (48) coopère avec le support (50), la disposition relative dudit support (50) et dudit diffuseur (23, 25) étant telle que ledit écoulement d'air est homogène et tangentiel aux surfaces émergente et incidente dudit au moins un verre optique (48) lorsque l'au moins un verre optique (48) coopère avec le support (50).

2. Dispositif de séchage (3) selon la revendication 1, dans lequel l'enceinte (7) possède une première (19) et une deuxième entrée (21) agencées pour que l'écoulement de la première entrée (19) soit parallèle et de sens opposé à l'écoulement de la deuxième entrée (21).

3. Dispositif de séchage (3) selon l'une des revendications 1 ou 2, dans lequel chaque diffuseur (23, 25) comporte une sortie plane percée d'une pluralité de trous (27), la distance séparant les centres de deux trous voisins étant comprise entre une fois et trois fois le diamètre du trou, le diamètre de chaque trou étant compris entre 0,5 et 3 mm.

4. Dispositif de séchage (3) selon l'une des revendications précédentes, dans lequel des moyens de régulation des débits du flux d'air extérieur et du flux d'air repris sont agencés de manière à modifier la proportion du flux d'air extérieur, par rapport à l'ensemble constitué des flux d'air extérieur et d'air repris, entre 0 et 100%.

5. Dispositif de séchage (3) selon l'une des revendications précédentes ; dans lequel des moyens de régulation de la température du flux d'air de séchage comportent une sonde de mesure de la température (47) et un élément chauffant (45) en contact avec le flux d'air de séchage.

6. Dispositif de séchage (3), selon l'une des revendications précédentes, dans lequel un système d'ouverture de l'enceinte (7) est agencé pour permettre le passage d'un verre optique (48).

7. Dispositif de séchage (3), selon la revendication 6, dans lequel l'orifice d'évacuation (11) de l'enceinte (7) du dispositif de séchage (3) est compris dans le système d'ouverture.

8. Dispositif de séchage (3), selon la revendication 7, dans lequel le système d'ouverture comprend au moins un volet (15), l'orifice d'évacuation (11) étant disposé en périphérie du volet (15).

9. Banc de traitement de surface (1) dudit au moins un verre optique (48) comportant :
- une hotte aspirante pourvue de moyens d'extraction de l'air et des vapeurs hors du banc de traitement depuis une zone d'extraction (5) du banc de traitement (1),
- le dispositif de séchage (3), selon l'une des revendications précédentes, dans lequel l'orifice d'évacuation (11) est en communication fluidique avec la zone d'extraction (5), la pression de la zone d'extraction (5) étant inférieure à la pression dans l'enceinte (7).

## Patentansprüche

1. Trocknungsvorrichtung (3) für zumindest ein optisches Glas (48), Folgendes umfassend:
- einen abgeschlossenen Raum (7), der dazu bestimmt ist, zumindest ein optisches Glas (48) aufzunehmen, und zumindest einen Lufteinlass (19) und zumindest einen Luftauslass (29) aufweist,
wobei der besagte zumindest eine Lufteinlass (19, 21) zumindest einen Diffusor (23, 25) besitzt, der angeordnet ist, um einen Luftstrom zu erzeugen,
- einen Luftzirkulationskreislauf (9), der angeordnet ist, um eine Trocknungsluftströmung vom besagten zumindest einen Einlass (19) zum besagten zumindest einen Auslass (29) zu blasen,
- eine Evakuierungsöffnung (11), in Fluidverbindung mit dem abgeschlossenen Raum (7), um einen ersten Teil der Trocknungsluftströmung, der evakuierte Luftströmung genannt wird, aus der Trocknungsvorrichtung (3) zu evakuieren,
- einen Kollektor (31), der Folgendes aufweist:
-- eine Zufuhr eines zweiten Teils der Trocknungsluftströmung, der durch Fluidverbindung mit dem abgeschlossenen Raum (7) aus dem besagten zumindest einen Luftauslass (29) übernommene Luft genannt wird,
-- eine Zufuhr einer Außenluftströmung (33) in die Trocknungsvorrichtung (3),
-- einen Auslass (43) in Fluidverbindung mit dem Zirkulationskreislauf (9)
- einen Halter (50) für das zumindest eine optische Glas (48), wobei der Halter (50) im Inneren des abgeschlossenen Raumes (7) angeordnet ist,
**dadurch gekennzeichnet, dass** der besagte Halter (50) angeordnet ist, damit die Einfalls- und die Austrittsfläche des zumindest einen optischen Glases (48) jeweils eine Kontaktzone mit der im abgeschlossenen Raum (7) enthaltenen Luft aufweisen, wenn das zumindest eine optische Glas (48) mit dem Halter (50) zusammenwirkt, wobei die Anordnung des besagten Halters (50) und des besagten Diffusors (23, 25) zueinander dergestalt ist, dass der besagte Luftstrom homogen und tangential zur Einfalls- und die Austrittsfläche des besagten zumindest einen optischen Glases (48) ist, wenn das zumindest eine optische Glas (48) mit dem Halter (50) zusammenwirkt.

2. Trocknungsvorrichtung (3) nach Anspruch 1, wobei der abgeschlossene Raum (7) einen ersten (19) und einen zweiten Einlass (21) besitzt, die angeordnet sind, damit der Strom des ersten Einlasses (19) parallel und in entgegengesetzter Richtung zum Strom des zweiten Einlasses (21) verläuft.

3. Trocknungsvorrichtung (3) nach einem Ansprüche 1 oder 2, wobei jeder Diffusor (23, 25) einen geraden Auslass umfasst, der mit einer Vielzahl von Bohrungen (27) versehen ist, wobei der Abstand zwischen den Mittelpunkten von zwei benachbarten Bohrungen zwischen einmal und dreimal dem Durchmesser der Bohrung entspricht, wobei der Durchmesser einer jeden Bohrung zwischen 0,5 und 3 mm liegt.

4. Trocknungsvorrichtung (3) nach einem der vorhergehenden Ansprüche, wobei die Mittel zum Regeln der Durchflüsse der Außenluftströmung und der übernommenen Luftströmung angeordnet sind, um die Proportion der Außenluftströmung im Verhältnis zur Einheit, die aus der Strömung der Außenluft und der übernommenen Luft gebildet wird, zwischen 0 und 100% zu verändern.

5. Trocknungsvorrichtung (3) nach einem der vorhergehenden Ansprüche, wobei die Mittel zum Regeln der Temperatur der Trocknungsluftströmung eine Sonde zum Messen der Temperatur (47) und ein Heizelement (45) in Kontakt mit der Trocknungsluftströmung umfassen.

6. Trocknungsvorrichtung (3) nach einem der vorhergehenden Ansprüche, wobei ein System zum Öffnen des abgeschlossenen Raumes (7) ausgeführt ist, um den Durchlass eines optischen Glases (48) zu ermöglichen.

7. Trocknungsvorrichtung (3) nach Anspruch 6, wobei die Evakuierungsöffnung (11) des abgeschlossenen Raumes (7) der Trocknungsvorrichtung (3) im System zum Öffnen enthalten ist.

8. Trocknungsvorrichtung (3) nach Anspruch 7, wobei das System zum Öffnen zumindest eine Klappe (15) umfasst, wobei die Evakuierungsöffnung (11) am Umfang der Klappe (15) angeordnet ist.

9. Oberflächenbehandlungswerkbank (1) für das zumindest eine optische Glas (48), Folgendes umfassend:
- eine Abzugshaube, die mit Mitteln zum Extrahieren der Luft und der Dämpfe aus der Behandlungswerkbank aus einer Extraktionszone (5) der Behandlungswerkbank (1) versehen ist,
- die Trocknungsvorrichtung (3) nach einem der vorhergehenden Ansprüche, wobei die Evakuierungsöffnung (11) in Fluidverbindung mit der Extraktionszone (5) steht, wobei der Druck der Extraktionszone (5) geringer ist, als der Druck im abgeschlossenen Raum (7).

## Claims

1. A drying device (3) of at least one optical glass (48), comprising:
- an enclosure (7), intended for accommodating at least one optical glass (48) having at least one air inlet (19) and at least one air outlet (29), said at least one air inlet (19, 21) having a diffuser (23, 25) arranged to generate an air stream,
- an air circulation circuit (9) arranged to blow a drying air flow from said at least one inlet (19) to said at least one outlet (29),
- a discharge orifice (11), in fluid communication with the enclosure (7), so as to discharge a first part of the drying air flow, called the discharged air flow, out of the drying device (3)
- a collector (31) having:
∘ an inflow of a second part of the drying air flow, called return air in fluid communication with the enclosure (7) from said at least one air outlet (29),
o an inflow of an external air flow (33) to the drying device (3),
o an outlet (43) in fluid communication with the circulation circuit (9)
- a support (50) of the at least one optical glass (48), the support (50) being disposed inside the enclosure (7) **characterized in that** said support (50) is arranged so that the emerging and incident surfaces of the at least one optical glass (48) each have an area of contact with the air contained in the enclosure (7) when the at least one optical glass (48) cooperates with the support (50), the relative disposition of said support (50) and said diffuser (23,25) being such that said air stream is homogeneous and tangential to the emerging and incident surfaces of said at least one optical glass (48) when the at least one optical glass (48) cooperates with the support (50).

2. The drying device (3) according to claim 1, wherein the enclosure (7) has a first (19) and a second (21) inlet arranged so that the stream of the first inlet (19) is parallel and opposite to the stream of the second inlet (21).

3. The drying device (3) according to any of claims 1 or 2, wherein each diffuser (23, 25) includes a flat outlet pierced with a plurality of holes (27), the distance separating the centers of two neighboring holes being comprised between one time and three times the diameter of the hole, the diameter of each hole being comprised between 0.5 and 3 mm.

4. The drying device (3) according to any of the preceding claims, wherein means for regulating the flow rates of the external air flow and the return air flow are arranged so as to modify the proportion of the external air flow, relative to the set consisting of the external air flow and the return air flow, between 0 and 100%.

5. The drying device (3) according to any of the preceding claims; wherein means for regulating the temperature of the drying air flow include a temperature measuring probe (47) and a heating element (45) in contact with the drying air flow.

6. The drying device (3), according to any of the preceding claims, wherein an opening system of the enclosure (7) is arranged to allow the passage of an optical glass (48).

7. The drying device (3), according to claim 6, wherein the discharge orifice (11) of the enclosure (7) of the drying device (3) is comprised in the opening system.

8. The drying device (3), according to claim 7, wherein the opening system comprises at least one flap (15), the discharge orifice (11) being disposed at the periphery of the flap (15).

9. A surface treatment bench (1) of said at least one optical glass (48) including:
- an exhaust hood provided with means for extracting the air and the vapors out of the treatment bench from an extraction area (5) of the treatment bench (1),
- the drying device (3), according to any of the preceding claims, wherein the discharge orifice (11) is in fluid communication with the extraction area (5), the pressure of the extraction area (5) being lower than the pressure in the enclosure (7).
